(19) Europäisches Patentamt

European Patent Office

Office européen des brevets

(11) **EP 1 577 127 A2**

(12) **EUROPEAN PATENT APPLICATION**

(43) Date of publication:
**21.09.2005 Bulletin 2005/38**

(51) Int Cl.⁷: **B60G 21/055**, B60G 17/015

(21) Application number: **05005757.9**

(22) Date of filing: **16.03.2005**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU** | (72) Inventors:<br>• **Ohta, Yuuki**<br>  **Kariya-shi Aichi-ken, 448-8650 (JP)**<br>• **Kato, Hiroaki**<br>  **Kariya-shi Aichi-ken, 448-8650 (JP)** |
| (30) Priority: **17.03.2004 JP 2004075963** | (74) Representative: **TBK-Patent**<br>**Bavariaring 4-6**<br>**80336 München (DE)** |
| (71) Applicant: **AISIN SEIKI KABUSHIKI KAISHA**<br>**Aichi-ken 448-8650 (JP)** | |

(54) **Stabilizer control apparatus**

(57) In a stabilizer control apparatus for a vehicle, a stabilizer includes a pair of stabilizer bars (SBfr,SBfl) disposed between a right wheel and a left wheel of the vehicle, and an actuator (FT,RT) having an electric motor (M) and a speed reducing mechanism (RD) disposed between the stabilizer bars. A desired torque for the electric motor is calculated on the basis of a vehicle behavior and a steering operation of a vehicle driver, and estimated is a torsional torque created on each end portion of each of the stabilizer bars mounted on the vehicle. According to a feedback controller, the electric motor is controlled in response to the result compared between the desired torque and the estimated torsional torque.

FIG. 1

**Description**

BACKGROUND OF THE INVENTION

1. Field of the Invention

The present invention relates to a stabilizer control apparatus for a vehicle, and more particularly to an apparatus for controlling a torsional rigidity of a stabilizer disposed between a right wheel and a left wheel, by means of an electrically operated actuator.

2. Description of the Related Arts

In general, a stabilizer control apparatus for a vehicle is provided for applying an appropriate roll moment to a vehicle by means of a stabilizer while the vehicle is performing a turning operation, to reduce or restrict a rolling motion of the vehicle body. In order to achieve this function, an active roll restraining control apparatus using an electric system has been known heretofore. For example, Japanese Patent Laid-open Publication No.2000-71739 discloses an apparatus for controlling efficiency of a stabilizer to vary an apparent torsional rigidity of the stabilizer by driving and controlling an actuator in response to a turning level of a vehicle. In practice, driving force of an electromagnetic linear actuator is calculated on the basis of signals of various sensors, and converted into electric value to provide a desired electric value for performing a PID control. And, it is described that the actuator is actuated to enlarge or shorten the stabilizer, so as to provide an appropriate torsional rigidity for it, by feeding exciting current to a stator having laminated plates with coils connected together in a three-phase delta circuit, in response to a synchronous signal based on the output of position detecting means, and feeding actual current back to it.

Furthermore, in the U.S. Patent No.6,425,585 (corresponding to International Publication No. WO9967100, and Japanese Patent Laid-open Publication No.2002-518245), there is disclosed a system for stabilizing vehicles against rolling, with at least one slewing drive arranged between halves of the front and/ or rear chassis stabilizer, thus creating an initial stress of the stabilizer halves to reduce or suppress the rolling motion and, in the event of roll, applying a counter-torque to the vehicle body as a function of output signals of a sensor for detecting a roll parameter. The slewing drive includes three basic components, namely an electric motor, a step-down gear and a brake disposed between them. The torque generated by the electric motor is converted by the step-down gear into the torque needed for the initial stress of the stabilizers. One stabilizer half is via a bearing mount connected directly to the casing of the electromechanical slewing drive and the other stabilizer half is connected to the output end (high torque end) of step-down gear and is mounted in the bearing mount.

According to the apparatus as described in the U.S. Patent No.6,425,585, in the case where an electric current feedback control is performed as explained in the Japanese Publication No.2000-71739, to generate an output of the electric motor and transmit it through the step-down gear, i.e., speed reducing mechanism, there might be caused a problem as follows:
The motor torque generated by feeding the electric current to the electric motor and the torsional torque created at each end portion of the stabilizer bars to be mounted on the vehicle through the step-down gear, correspond to each other statically. In view of its transient state, however, the torsional torque is created at each end portion of the stabilizer bars to be mounted on the vehicle, generally, after the motor torque was generated. Therefore, the motor torque output from the electric motor can be controlled, with the electric current fed thereto being controlled. However, the torsional torque created at each end portion of the stabilizer bars to be mounted on the vehicle can not be controlled directly, so that it is difficult to perform a rapid torque control.

SUMMARY OF THE INVENTION

Accordingly, it is an object of the present invention to provide a stabilizer control apparatus, which includes an actuator having an electric motor and a speed reducing mechanism, with the electric motor being actuated to control a torsional force of the stabilizer, and which is capable of controlling a torsional torque created at each end portion of the stabilizer bars to be mounted on the vehicle, rapidly and smoothly, to reduce a rolling motion of a vehicle body appropriately.

In accomplishing the above and other objects, the stabilizer control apparatus is provided with a stabilizer including a pair of stabilizer bars disposed between a right wheel and a left wheel of a vehicle, and an actuator having an electric motor and a speed reducing mechanism disposed between the stabilizer bars. The apparatus is also provided with a vehicle state detection device for detecting a vehicle behavior and a steering operation of a vehicle driver, a desired torque calculation device for calculating a desired torque for the electric motor on the basis of the result detected by the vehicle state detection device, and an end torque estimation device for estimating a torsional torque created on each end portion of each of the stabilizer bars mounted on the vehicle. And, a feedback controller is provided for controlling the electric motor in response to the result compared between the desired torque calculated by the desired torque calculation device and the torsional torque estimated by the end torque estimation device.

The end torque estimation device as described above may include a motor current sensor for monitoring electric current fed to the electric motor when a predetermined testing signal is input to the electric motor, and an end torque sensor for monitoring the torsional torque created on each end portion of each of the stabilizer bars, when the predetermined testing signal is input to the electric motor. Then, a first transfer function is set between the signal input to the electric motor and the result monitored by the motor current sensor, whereas a second transfer function is set between the signal input to the electric motor and the result monitored by the end torque sensor.

Or, the end torque estimation device as described above may include a motor torque sensor for monitoring a motor torque generated by the electric motor when a predetermined testing signal is input to the electric motor, and an end torque sensor for monitoring the torsional torque created on each end portion of each of the stabilizer bars, when the predetermined testing signal is input to the electric motor. A first transfer function is set between the signal input to the electric motor and the result monitored by the motor torque sensor, whereas a second transfer function is set between the signal input to the electric motor and the result monitored by the end torque sensor.

The end torque estimation devices as described above are preferably adapted to estimate the torsional torque created on the end portion of each of the stabilizer bars mounted on the vehicle, on the basis of the first and second transfer functions.

Further, the end torque estimation device as described above may include an equation of motion setting device for setting an equation of motion for a system from the electric motor to the end portion of each of the stabilizer bars mounted on the vehicle, and a motor torque sensor for monitoring electric current fed to the electric motor. The end torque estimation device is preferably adapted to estimate the torsional torque created on the end portion of each of the stabilizer bars mounted on the vehicle, on the basis of the equation of motion set by the equation of motion setting device, in response to the result monitored by the motor torque sensor.

In the stabilizer control apparatus as described above, the feedback controller may provide a mathematical model for a dynamic characteristic covering a system from the feedback controller to the actuator, so that a dynamic characteristic will cover a system from the actuator to the stabilizer bars, to set a feedback control gain in response to the result compared between the mathematical model and a normalized model provided in advance in accordance with a desired response.

BRIEF DESCRIPTION OF THE DRAWINGS

The above stated object and following description will become readily apparent with reference to the accompanying drawings, wherein like referenced numerals denote like elements, and in which:

FIG.1 is a block diagram showing a fundamental control for an example of a stabilizer actuator according to an embodiment of the present invention;
FIG.2 is a schematic block diagram of a vehicle having a stabilizer control apparatus according to an embodiment of the present invention;
FiG.3 is a block diagram illustrating a practical example of a stabilizer actuator according to an embodiment of the present invention;

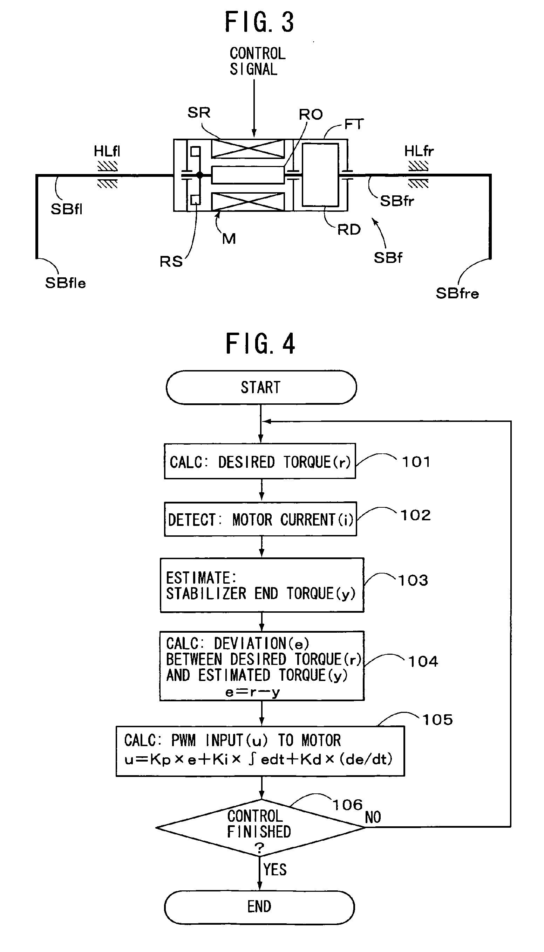

FIG.3 is a schematic diagram showing a practical example of a stabilizer actuator for use in an embodiment of the present invention;
FIG.4 is a flowchart showing an example of a stabilizer control operation according to an embodiment of the present invention;

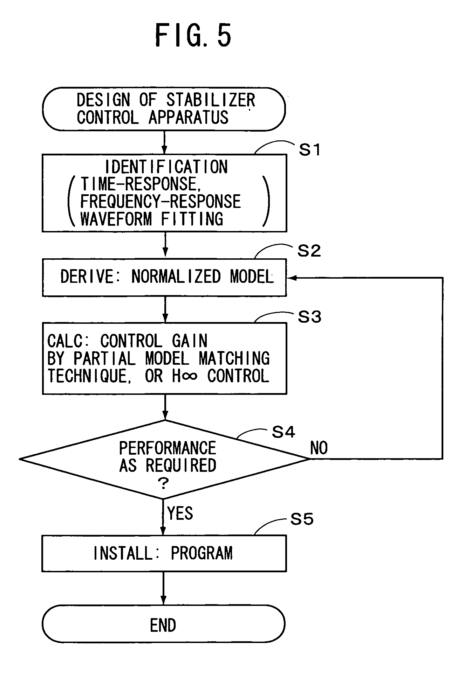

FIG.5 is a flowchart showing a designed example of a stabilizer control apparatus according to an embodiment of the present invention;

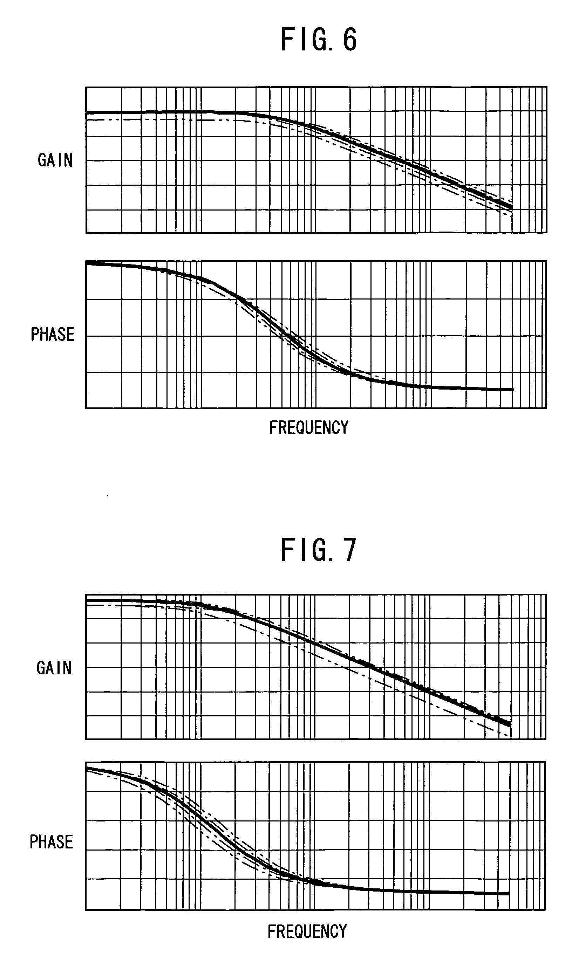

FIG.6 is a Bode diagram showing an example of a transfer function (Giu(s)) between PWM input signal (u) and motor current (i) of an electric motor (M), according to an embodiment of the present invention; and
FIG.7 is a Bode diagram showing an example of a transfer function (Gyu(s)) between PWM input signal (u) and stabilizer end torque (estimated torque (y)), according to an embodiment of the present invention.

DESCRIPTION OF THE PREFERRED EMBODIMENTS

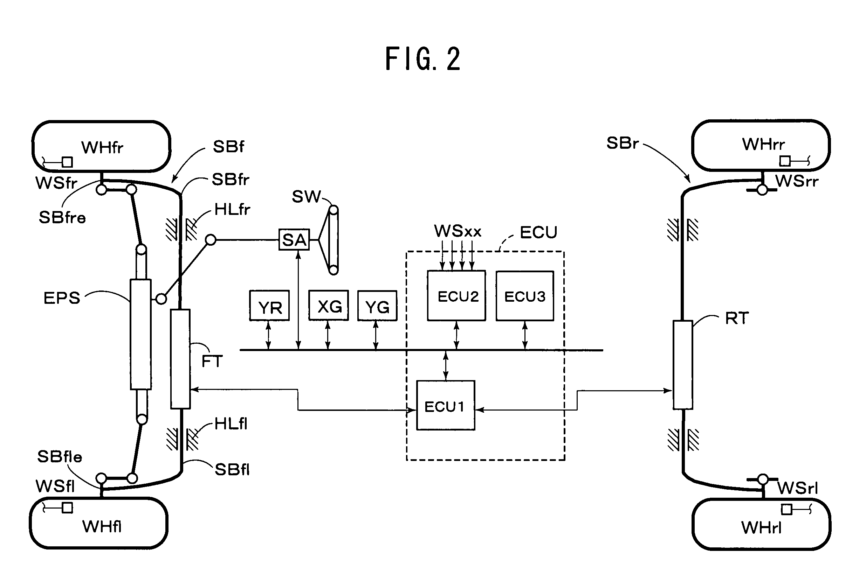

Referring to FIG.2, there is schematically illustrated a vehicle with a stabilizer control apparatus according to an embodiment of the present invention. As shown in FIG.2, a front stabilizer SBf and a rear stabilizer SBr are disposed to act as a torsion spring when a roll motion is applied to a vehicle body (not shown). The front stabilizer SBf and rear stabilizer SBr are actuated by stabilizer actuators FT and RT, respectively, to control each torsional rigidity, so as to restrain a roll angle of vehicle body resulted from a rolling motion of the vehicle body. The stabilizer actuators FT and RT are controlled by a stabilizer control unit ECU1 provided in an electronic controller ECU.

As shown in FIG.2, at each wheel WHxx of the vehicle, there is provided a wheel speed sensor WSxx, which is connected to the electronic controller ECU, and by which a signal having pulses proportional to a rotational speed of each wheel, i.e., a wheel speed signal is fed to the electronic controller ECU. "xx" designates each wheel, i.e., "fr" designates the wheel at the front right side as viewed from the position of a driver's seat, "fl" designates the wheel at the front left side, "rr" designates the wheel at the rear right side, and "rl" designates the wheel at the rear left side. Furthermore, there are provided a steering angle sensor SA for detecting a steering angle (handle angle) (δ) of a steering wheel SW, a longitudinal acceleration sensor XG for detecting a vehicle longitudinal acceleration (Gx), a lateral acceleration sensor YG for detecting a vehicle lateral acceleration (Gy), a yaw rate sensor YR for detecting a yaw rate (γ) of the vehicle, and so on, which are electrically connected to the electronic controller ECU. In addition to the stabilizer control unit ECU1 as described above, the electronic controller ECU includes a brake control unit ECU2, steering control unit ECU3 and the like, which are connected to a communication unit (not shown) having a CPU, ROM and RAM for communication, through a communication bus. Therefore, the information for each control system can be fed from other control systems.

As shown in FIG.3, the stabilizer actuator FT includes a front stabilizer SBf, which is provided with a pair of (right and left) stabilizer bars SBfr and SBfl. Mounting (or, connecting) end portions SBfre and SBfle are formed at free ends of the stabilizer bars SBfr and SBfl, so as to be connected to right and left wheel suspension systems (not shown), respectively, and the other end of one bar is connected to a rotor RO of an electric motor M through a speed reducing mechanism (or, speed reducer) RD, and the other end of the other one bar is connected to a stator SR of the electric motor M. The stabilizer bars SBfr and SBfl are mounted on a vehicle body (not shown) by holding members HLfr and HLfl. The stabilizer actuator RT is constituted in the same manner as described above. When the electric motor M is energized, torsional force is created on each of the divided stabilizer bars SBfr and SBfl, so that apparent torsion spring property of the front stabilizer SBf is changed, whereby the roll rigidity of the vehicle body is controlled. A rotational angle sensor RS is disposed in the stabilizer actuator FT, to act as a rotational angle detection device for detecting a rotational angle of the electric motor M.

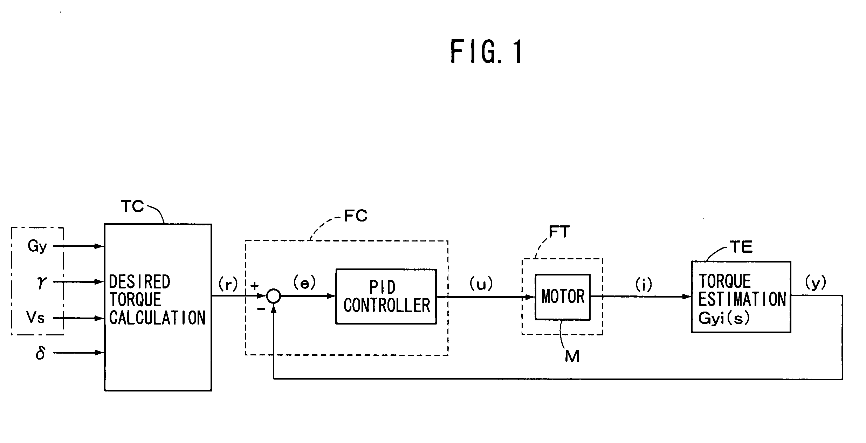

Next, referring to FIG.1, will be explained a fundamental control performed according to an example of the stabilizer actuator. The vehicle lateral acceleration (Gy) is detected by the lateral acceleration sensor YG as shown in FIG.2, and the yaw rate (γ) of the vehicle is detected by the yaw rate sensor YR, respectively, to be fed into a desired torque calculation block TC, together with the estimated vehicle speed (Vs), as the detected behavior of the vehicle. Then, the steering angle (δ) is detected by the steering angle sensor SA as shown in FIG.2, to be fed into the desired torque calculation block TC, as the detected steering operation of the vehicle driver. As a result, a desired torque (r) is set at the desired torque calculation block TC. Instead, a vehicle speed sensor (not shown) may be provided for detecting the vehicle speed (Vs) directly.

As described before, the torsional torque is created on each end portion (e.g., SBfre or SBfle) of each of the stabilizer bars (SBfr and SBfl) mounted on the vehicle, and the torsional torque is estimated by an end torque estimation device TE, to provide a torsional torque (y). Then, in response to the result compared between the desired torque (r) obtained at the desired torque calculation block TC and the torsional torque (y) estimated by the end torque estimation device TE, a feedback control is performed by a feedback controller FC. According to the feedback controller FC, a PID control is performed to equalize the estimated torque (y) with the desired torque (r), and provides a voltage applied to the electric motor M in the stabilizer actuator (e. g., FT) as a PWM input signal (duty signal), thereby to control the end torque created on each end portion of each of the stabilizer bars. Consequently, the vehicle roll angle can be reduced appropriately, when the vehicle is turning.

According to the end torque estimation device TE, a transfer function (Gyi(s)) or the like is provided in advance by a bench test. In the case where the stabilizer end torque can be measured, torque sensors (not shown) are fixed to the end portions (e.g., SBfre and SBfle) of stabilizer bars (SBfr and SBfl) to be mounted on the vehicle, respectively, so that the torsional torque created on the end portions (SBfre and SBfle) can be monitored. In this state, when a testing PWM input signal (u) such as a step signal, M-series signal, sine wave sweep signal or the like is fed to the electric motor M, the electric current therein is monitored by a motor current sensor (not shown). On the basis of variation of the monitored electric current (i), obtained is a transfer function from the PWM input signal (u) to the electric current (i) of the electric motor M.

In general, a plurality of transfer functions are provided depending upon magnitude or kind of the input signal, or state of the electric motor M, so that they are averaged to set the transfer function (Giu(s)) from the PWM input signal (u) to the electric current (i) of the electric motor M, as the first transfer function according to the present invention. For example, on a Bode diagram of FIG.6 showing transition of gain and phase with respect to a frequency, the averaged transfer function is indicated by a thick solid line. Likewise, the averaged transfer function (Gyu(s)) from the PWM input signal (u) to the estimated torque (y) (i.e., the stabilizer end torque) is set as the second transfer function according to the present invention, as indicated by a thick solid line on the Bode diagram of FIG.7. On the basis of those transfer functions, therefore, the estimated value of the end torque estimation device TE (practically indicated by a transfer function (Gyi(s)) is calculated as follows:

$$Gyi(s) = Gyu(s) \; / \; Giu(s) \qquad (1)$$

With the actual electric current being fed to the end torque estimation device TE (transfer function (Gyi (s)) as provided above, the estimated torque (y) of stabilizer end torque is derived to provide a deviation (e) between the desired torque (r) and the estimated torque (y), as [e = r-y]. On the basis of the deviation (e), determined is the PWM input signal (u) fed to the electric motor M in the

stabilizer actuator (e.g., FT) according to the following equation (2), so as to control the deviation (e) to be close to zero, i.e., to equalize the desired torque (r) and the estimated torque (y).

$$u = Kp \cdot e + Ki \cdot \int edt + Kd \cdot de/dt \qquad (2)$$

where "Kp" is a proportional gain, "Ki" is an integral gain, and "Kd" is a derivative gain.

FIG.4 is a flowchart showing an example for controlling the stabilizer according to the present embodiment. At the outset, the desired torque (r) is calculated at Step 101, as described above. Then, the electric current (i) of the electric motor M is detected at Step 102, and the program proceeds to Step 103, where the stabilizer end torque is estimated by the end torque estimation device TE (Gyi(s)) as described above, to provide the estimated torque (y). Then, the program proceeds to Step 104, where the deviation (e) between the desired torque (r) and the estimated torque (y) is calculated (e = r-y), and further proceeds to Step 105, where the PWM input signal (u) fed to the electric motor M is calculated (= Kp • e + Ki • ∫edt + Kd • de/dt). Accordingly, an appropriate stabilizer control is achieved on the basis of the input signal (u), and the program is terminated at Step 106. If the stabilizer control is continued to be controlled, the program returns to Step 101, to repeat the Steps as described above. Instead of detecting the electric current (i) of the electric motor M at Step 102, the motor torque may be detected. In this case, when the testing PWM input signal (u) is fed to the electric motor M, the torque thereof is monitored by a motor torque sensor (not shown). On the basis of variation of the monitored torque, obtained is a transfer function from the PWM input signal (u) to the motor torque of the electric motor M, to estimate the stabilizer end torque, in the same manner as described before.

FIG.5 shows an example of designing the stabilizer control apparatus according to an embodiment of the present invention. At Step S1, a mathematical model from the PWM input signal to the stabilizer end torque (estimated torque (y)) is derived through an experiment for identification, e.g., waveform fitting of time-response or frequency-response to experimental data. The dynamic characteristic from the PWM input signal to the stabilizer end torque corresponds to the dynamic characteristic from the feedback controller to the actuator, and the dynamic characteristic from the actuator to the stabilizer bars, which are indicated together by "P(s)". Then, with the transitional time or state from the estimated torque (y) to the desired torque (r) being considered, the program further proceeds to Step S2, where a stable mathematical model, i.e., normalized model can be derived in the form of the transfer function.

Next, at Step S3, a partial model matching technique is used for calculating a PID control gain, which corresponds to a feedback gain for the stabilizer control apparatus. According to the partial model matching technique, when a closed loop is constituted by the PID control for the actuator (e.g., FT) to be controlled, gains for each of the proportional control (P), integral control (I) and derivative control (D) are calculated, respectively, so that the frequency characteristic of the closed loop is equal to or approximate to the normalized model. Instead of the PID control, if a "H∞" control is used, the control gains are calculated, so that the frequency characteristic of the closed loop is equal to or approximate to the normalized model, and that a weighing function is provided for controlling the system to be stable within a range of possible dispersion of factors.

Consequently, a performance evaluation is made at Step S4. If it is determined that the performance has fulfilled requirements, discretization for the PID control or "H∞" control is executed at Step S5, so that a control program for performing it is installed in the apparatus. If it is determined at Step S4 that the performance has not fulfilled the requirements, the program returns to Step S2, so that the aforementioned Steps will be repeated.

In a stabilizer control apparatus for a vehicle, a stabilizer includes a pair of stabilizer bars disposed between a right wheel and a left wheel of the vehicle, and an actuator having an electric motor and a speed reducing mechanism disposed between the stabilizer bars. A desired torque for the electric motor is calculated on the basis of a vehicle behavior and a steering operation of a vehicle driver, and estimated is a torsional torque created on each end portion of each of the stabilizer bars mounted on the vehicle. According to a feedback controller, the electric motor is controlled in response to the result compared between the desired torque and the estimated torsional torque.

**Claims**

1. A stabilizer control apparatus for a vehicle, provided with a stabilizer (SBf, SBr) including a pair of stabilizer bars (SBfr, SBfl) disposed between a right wheel (WHfr, WHrr) and a left wheel (WHfl, WHrl) of said vehicle, and an actuator (FT, RT) having an electric motor (M) and a speed reducing mechanism (RD) disposed between said stabilizer bars (SBfr, SBfl), wherein said stabilizer bars (SBfr, SBfl) is mounted at free end portions (SBfre, SBfle) thereof on said vehicle, respectively, and provided with vehicle state detection means (YG, YR, SA) for detecting a vehicle behavior and a steering operation of a vehicle driver, wherein said electric motor (M) is controlled in response to the result detected by said vehicle state detection means (YG, YR, SA), to control a torsional force of said stabilizer (SBf, SBr), **characterized in that** the stabilizer control apparatus comprises:

   desired torque calculation means (TC) for calculating a desired torque for said electric motor (M) on the basis of the result detected by said vehicle state detection means (YG, YR, SA); end torque estimation means (TE) for estimating a torsional torque created on each end portion (SBfre, SBfle) of each of said stabilizer bars (SBfr, SBfl) mounted on said vehicle; and feedback control means (FC) for controlling said electric motor (M) in response to the result compared between the desired torque (r) calculated by said desired torque calculation means (TC) and the torsional torque (y) estimated by said end torque estimation means (TE).

2. The stabilizer control apparatus of claim 1, **characterized in that** said end torque estimation means (TE) comprises;

motor current monitoring means for monitoring electric current fed to said electric motor (M) when a predetermined testing signal is input to said electric motor (M) ;

end torque monitoring means for monitoring the torsional torque created on each end portion (SBfre, SBfle) of each of said stabilizer bars (SBfr, SBfl), when the predetermined testing signal is input to said electric motor (M) ;

first transfer function setting means for setting a first transfer function (Giu(s)) between the signal input to said electric motor (M) and the result monitored by said motor current monitoring means; and

second transfer function setting means for setting a second transfer function (Gyu(s)) between the signal input to said electric motor (M) and the result monitored by said end torque monitoring means, and that said end torque estimation means (TE) estimates the torsional torque created on said end portion (SBfre, SBfle) of each of said stabilizer bars (SBfr, SBfl) mounted on said vehicle, on the basis of the first and second transfer functions (Giu(s), (Gyu(s)) set by said first and second transfer function setting means.

3. The stabilizer control apparatus of claim 1, **characterized in that** said end torque estimation means (TE) comprises;

motor torque monitoring means for monitoring a motor torque generated by said electric motor (M) when a predetermined testing signal is input to said electric motor (M);

end torque monitoring means for monitoring the torsional torque created on each end portion (SBfre, SBfle) of each of said stabilizer bars (SBfr, SBfl), when the predetermined testing signal is input to said electric motor (M);

first transfer function setting means for setting a first transfer function (Giu(s)) between the signal input to said electric motor (M) and the result monitored by said motor torque monitoring means; and

second transfer function setting means for setting a second transfer function (Gyu(s)) between the signal input to said electric motor (M) and the result monitored by said end torque monitoring means, and that said end torque estimation means (TE) estimates the torsional torque created on said end portion (SBfre, SBfle) of each of said stabilizer bars (SBfr, SBfl) mounted on said vehicle, on the basis of the first and second transfer functions (Giu(s), (Gyu(s)) set by said first and second transfer function setting means.

4. The stabilizer control apparatus of claim 1, **characterized in that** said end torque estimation means (TE) comprises;

equation of motion setting means for setting an equation of motion for a system from said electric motor (M) to said end portion (SBfre, SBfle) of each of said stabilizer bars (SBfr, SBfl) mounted on said vehicle; and

motor torque monitoring means for monitoring electric current fed to said electric motor (M), and that said end torque estimation means (TE) estimates the torsional torque created on said end portion (SBfre, SBfle) of each of said stabilizer bars (SBfr, SBfl) mounted on said vehicle, on the basis of the equation of motion set by said equation of motion setting means, in response to the result monitored by said motor torque monitoring means.

5. The stabilizer control apparatus of claims 2-4, **characterized in that** said feedback control means (FC) provides a mathematical model for a dynamic characteristic covering a system from said feedback control means (FC) to said actuator (FT, RT), and a dynamic characteristic covering a system from said actuator (FT, RT) to said stabilizer bars (SBfr, SBfl), to set a feedback control gain in response to the result compared between said mathematical model and a normalized model provided in advance in accordance with a desired response.

6. The stabilizer control apparatus of claim 1, **characterized in that** said end torque estimation means (TE) estimates the torsional torque created on each end portion (SBfre, SBfle) of each of said stabilizer bars (SBfr, SBfl) mounted on said vehicle, on the basis of a motor torque generated by said electric motor (M).

7. The stabilizer control apparatus of claim 1, **characterized in that** said end torque estimation means (TE) estimates the torsional torque created on each end portion (SBfre, SBfle) of each of said stabilizer bars (SBfr, SBfl) mounted on said vehicle, on the basis of a transfer function (Giu(s)) between an input signal fed to said electric motor (M) and the electric current output from said electric motor (M), and a transfer function (Gyu(s)) between the input signal fed to said electric motor (M) and the torsional torque created on each end portion (SBfre, SBfle) of each of said stabilizer bars (SBfr, SBfl).

8. The stabilizer control apparatus of claim 7, **characterized in that** said end torque estimation means (TE) obtains a transfer function (Gyi(s)) between the electric current output from said electric motor (M) and the torsional torque (y) estimated by said end torque estimation means (TE), according to the following equation:

$$Gyi(s) = Gyu(s) / Giu(s).$$

9. The stabilizer control apparatus of claim 8, **characterized in that** said feedback control means (FC) obtains an estimated torque (y), with the electric current output from said electric motor (M) being input to the transfer function (Gyi(s)), and controls said electric motor (M) to make a deviation (e) between the desired torque (r) and the estimated torque (y) to be zero.

FIG. 1

FIG. 2

# FIG. 3

CONTROL
SIGNAL

SR

RO

FT

HLfl

HLfr

SBfl

SBfr

SBfle

RS

M

RD

SBf

SBfre

# FIG. 4

START

CALC: DESIRED TORQUE(r) — 101

DETECT: MOTOR CURRENT(i) — 102

ESTIMATE:
STABILIZER END TORQUE(y) — 103

CALC: DEVIATION(e)
BETWEEN DESIRED TORQUE(r)
AND ESTIMATED TORQUE(y) — 104
$e = r - y$

CALC: PWM INPUT(u) TO MOTOR — 105
$u = Kp \times e + Ki \times \int e\,dt + Kd \times (de/dt)$

106
CONTROL
FINISHED
? — NO

YES

END

# FIG. 5

DESIGN OF STABILIZER
CONTROL APPARATUS

↓

S1

IDENTIFICATION
( TIME-RESPONSE,
FREQUENCY-RESPONSE
WAVEFORM FITTING )

↓

S2

DERIVE: NORMALIZED MODEL

↓

S3

CALC: CONTROL GAIN
BY PARTIAL MODEL MATCHING
TECHNIQUE, OR H∞ CONTROL

↓

S4

PERFORMANCE
AS REQUIRED
? — NO

YES ↓

S5

INSTALL: PROGRAM

↓

END

# FIG. 6

GAIN

PHASE

FREQUENCY

# FIG. 7

GAIN

PHASE

FREQUENCY